Europäisches Patentamt

European Patent Office

Office européen des brevets

(11) Veröffentlichungsnummer: **0 448 994 A1**

# EUROPÄISCHE PATENTANMELDUNG

(21) Anmeldenummer: 91103332.2

(22) Anmeldetag: 05.03.91

(51) Int. Cl.⁵: G01S 3/74

(30) Priorität: 28.03.90 DE 4009882

(43) Veröffentlichungstag der Anmeldung:
02.10.91 Patentblatt 91/40

(84) Benannte Vertragsstaaten:
BE DE FR GB IT NL

(71) Anmelder: **Siemens Aktiengesellschaft**
**Wittelsbacherplatz 2**
**W-8000 München 2(DE)**

(72) Erfinder: **Ott, Anselm, Dipl.-Ing.**
**An der Leiten 2A**
**W-8132 Tutzing(DE)**
Erfinder: **Helbing, Michael, Dipl.-Ing.**
**Würmseestrasse 66**
**W-8000 München 71(DE)**
Erfinder: **Förtsch, Wolfgang, Dipl.-Ing.**
**Parchwitzerstrasse 2**
**W-8080 Fürstenfeldbruck(DE)**

(54) **Verfahren zur Peilung einer oder mehrerer Mikrowellen-Signalquellen.**

(57) Zur Peilung mit zwei oder mehr sich überlappenden Antennenkeulen mittels gleichzeitiger Amplitudenpegelmessungen der Antennensignale und Pegelvergleichs werden die über die einzelnen Antennen (1-6) aufgenommenen Hochfrequenz-Signale bei der Umsetzung in die Zwischenfrequenzlage zusätzlich noch frequenzmäßig gestaffelt, so daß nach einer Kombinierung (23) aller Zwischenfrequenzsignale und nachfolgender Frequenzkanalisierung (24) aufgrund der bei der Staffelung vorgegebenen Frequenzdifferenzen der Zwischenfrequenzsignale die Antennen bestimmt werden können, welche die Hochfrequenzsignale jeweils empfangen haben. Es ist dann eine eindeutige Berechnung des Lagewinkels der Signalquelle möglich.

FIG 3

Die Erfindung bezieht sich auf ein Verfahren zur Peilung einer oder mehrerer Mikrowellensignale insbesondere in Pulsform abgebenden Signalquellen unter Verwendung von zwei oder mehr für gleiche Frequenz ausgelegten Antennen, deren Strahlungskeulen zueinander winkelmäßig versetzt sind, sich aber überlappen, so daß durch gleichzeitige Vermessung der Amplitudenpegel der mittels dieser Antennen empfangenen Signale und Pegelvergleich der Lagewinkel der Signalquellen durch Berechnung ermittelt wird.

Die Auffindung der Signaleinfallsrichtung wird in bekannter Weise entweder durch scharfbündelnde, große, rotierende Antennen, große Kreisgruppenantennen oder kleine rotierende Antennen mit einer Auswertung von Flankenpunkten erreicht. Es gibt auch feststehende oder rotierende Peilantennen, die mit einem Pegelvergleich der empfangenen Signale von jeweils zwei Einzelantennen arbeiten, die jedoch nicht breitbandig genug sind und außerdem keine genügend hohe Genauigkeit gewährleisten. Eine solche Antenne in drehbarer Bauweise ist aus der DE-PS 807 101 bekannt. Die beiden Einzelantennen rotieren dabei mechanisch synchron, sind aber winkelmäßig zueinander versetzt, so daß sich die beiden durch sie erzeugten Hauptstrahlungskeulen überlappen. Innerhalb des den Peilsektor bestimmenden Überlappungsbereiches wird durch den Pegelvergleich der mittels dieser beiden Einzelantennen empfangenen Signale der Lagewinkel der Signalquelle ermittelt.

Der Einfallswinkel eines Mikrowellensignals wird somit aufgrund des Amplitudenunterschieds bei Empfang durch zwei Richtantennen bestimmt, deren Achsen um einen konstanten Winkel verdreht sind. Der Peilwinkel ist dem Quotienten der beiden Antennensignale proportional. Zur Messung sind zwei alternative Peilkonzepte möglich. Das erste Konzept arbeitet mit einer sogenannten sequentiellen Keulenumtastung, bei der die Antennensignale nacheinander an den Eingang eines Empfängers geschaltet werden. Die Peilantennenpegel werden somit nacheinander gemessen. Das zweite Konzept, welches z.B. aus der DE-PS 27 02 114 bekannt ist, betrifft ein Peilverfahren, bei dem die beiden Antennen unter Zwischenschaltung jeweils eines Teilers, z.B. eines Richtkopplers, mit zwei Empfängern verbunden sind, mit deren Ausgangssignalen der Pegelvergleich der Signale des Antennenpaares bei jedem einzelnen Impuls nach Art eines simultanen Monopuls-Verfahrens in einer Pegelvergleichsschaltung durchgeführt wird. Bei diesem Verfahren sind somit zwei vollständige kalibrierte Empfangswege erforderlich.

Aufgabe der Erfindung ist es, ein Peilverfahren zur schnellen Ermittlung der Lagewinkel einer oder mehrerer Mikrowellen-Signalquellen anzugeben, das bei Anwendung nur eines einzigen breitbandigen Empfangssystems im Zwischenfrequenzbereich - auch bei sehr kurzen Eingangsimpulsen -durchgeführt werden kann. Dabei soll aber nicht von dem mit sequentieller Keulenumtastung arbeitenden Peilverfahren Gebrauch gemacht werden, da dieses unter anderem mit Störeinflüssen aufgrund der Antennenumschaltung auf das Empfangsspektrum und mit Meßschwierigkeiten bei kurzen Impulsen und bei ungünstiger Antennenumschalttriggerung wegen der Zeitauflösung behaftet ist.

Diese Aufgabe wird bei einem Verfahren der eingangs genannten Art dadurch gelöst, daß die in den einzelnen Antennen empfangenen Hochfrequenzsignale in antennenmäßig getrennten Hochfrequenzeingangsstufen in eine Zwischenfrequenzlage umgesetzt und zusätzlich mittels frequenzmäßig voneinander abweichender Lokaloszillatoren in Zwischenfrequenzsignale umgesetzt werden, die sich hinsichtlich ihrer Frequenzen entsprechend der unterschiedlichen, gestaffelten Lokaloszillatorfrequenzen unterscheiden, und daß nach einer Zusammenfassung aller Zwischenfrequenzsignale mittels eines Kombinierers und nur einer sich daran anschließenden, mit gestaffelten Bandfiltern durchgeführten Kanalisierung in parallele, jeweils einen sehr schmalen Zwischenfrequenz-Frequenzbereich überdeckende und insgesamt die gesamte Zwischenfrequenz-Bandbreite abdeckende Kanäle in den Kanälen die Amplitudenpegel gemessen werden, wobei dann jeweils der Frequenzbereich der Kanäle der pegelmäßig vermessenen Signale eine eindeutige Zuordnung zu denjenigen Antennen und damit auch Strahlungskeulen herstellt, aus denen die empfangenen Signale stammen. Der Einfallswinkel eines Mikrowellensignals wird wie bei der sequentiellen Peilung in der Zwischenfrequenzlage in einem einzigen Empfangssystem durch den unterschiedlichen Empfangspegel von zwei oder mehr Antennen bestimmt, deren Achsen in verschiedene Richtungen weisen und deren Empfangskeulen sich überlappen. Die Pegel werden jedoch nicht nacheinander sondern gleichzeitig gemessen. In dem breitbandigen kanalisierenden Empfangssystem ist es möglich, viele Signale parallel zu verarbeiten, sofern sie sich in der Frequenz unterscheiden. Durch einen gewollten Frequenzversatz beim Mischprozeß in die Zwischenfrequenzebene kann dies für die verschiedenen Antennensignale erzielt werden. Das Peilverfahren nach der Erfindung arbeitet mit Echtzeit-Messung. Eine Zeitauflösung des Empfangssystems im Zwischenfrequenzbereich kommt bei diesem Peilverfahren nicht zum Tragen. Ursächlich hierfür ist, daß sich etwaige Pegelmeßfehler bei den gemessenen Zwischenfrequenzsignalen etwa gleich auswirken, so daß die Peilwertdifferenz- und die Winkelberechnung nicht gestört sind.

Eine 360°-Azimut-Winkelerfassung der Mikrowellensignale kann sichergestellt werden, wenn mit vier Antennen empfangen wird, deren Strahlungskeulen in der Azimut-Ebene um 90° versetzt sind. Darüberhinaus kann zusätzlich eine Elevationswinkelerfassung der einfallenden Mikrowellensignale erfolgen, wenn mit zwei hinsichtlich der vier Azimut-Erfassungs-Antennen ortogonal montierten, weiteren Antennen empfangen wird, deren Strahlungskeulen um 180° in der Elevationsebene versetzt sind. Es erfolgt dann in vorteilhafter Weise eine sphärische Erfassung über die Vollkugel, was insbesondere dann von Bedeutung ist, wenn das Verfahren nach der Erfindung in einem Aufklärungsempfänger an Bord eines Luftfahrzeugs vorgenommen wird.

In Zweckmäßiger Weise sind die Frequenzabstände zwischen den einzelnen Lokaloszillatoren zumindest so gestaffelt, daß sich keine Mehrdeutigkeiten in einem Frequenzkanal bezüglich der Antennenherkunft der Zwischenfrequenzsignale ergeben.

Das Peilverfahren nach der Erfindung läßt sich dann in verhältnismäßig wenig aufwendiger Weise durchführen, wenn in den Hochfrequenzeingangsstufen die durch die frequenzmäßig gestaffelten Lokaloszillatoren gebildete Zwischenfrequenz-Signalerzeugung bei der Umsetzung der Hochfrequenzsignale in die Zwischenfrequenzlage bereits mit berücksichtigt wird.

Die Erfindung wird im folgenden anhand von fünf Figuren erläutert. Es zeigen:

Fig. 1 in einer Diagrammdarstellung Antennenkeulen für eine 360°-Azimut-Winkelerfassung,

Fig. 2 ebenfalls in Diagrammform Antennenkeulen für eine zusätzliche 360°-Elevationswinkelerfassung,

Fig. 3 das Blockschaltbild einer Schaltung zur Durchführung des Peilverfahrens nach der Erfindung,

Fig. 4 ein nach der Kanalisierung vorliegendes Pulsspektrum,

Fig. 5 das Spektrum eines Einzelimpulses, der über drei Antennen empfangen wurde, ebenfalls nach der Kanalisierung.

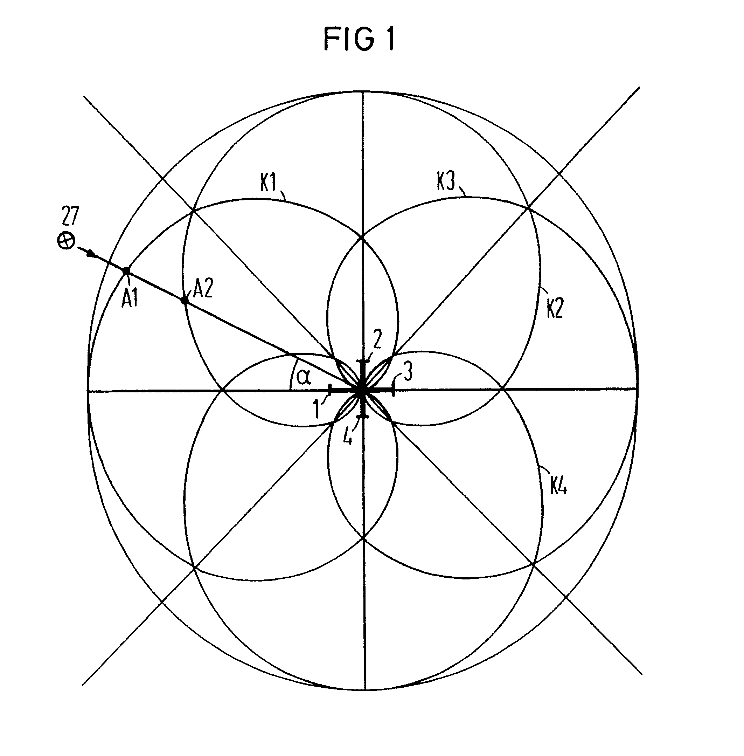

In Fig. 1 sind in einer Draufsicht auf eine Azimut-Ebene schematisch vier Antennen 1-4 dargestellt, die in der Azimut-Ebene vier um 90° versetzte Strahlungskeulen K1 bis K4 aufweisen. Die Strahlungskeulen K1 bis K4 überlappen sich in der dargestellten Weise. Die vier Antennen 1-4, deren Hauptstrahlrichtungen der Reihe nach um 90° in der Azimut-Ebene versetzt sind, stellen eine Erfassung über 360° im Azimut-Bereich sicher. Soll eine sich beispielsweise mit einem Lagewinkel α zur Hauptstrahlrichtung der Antenne 1 befindende Mikrowellen-Signalquelle 27 gepeilt werden, so ergeben sich bei den Strahlungskeulen K1 und K2 der Antennen 1 bzw. 2 die Pegelwerte A1 bzw. A2. Bei den Antennen 3 und 4 werden keine Pegelwerte von Bedeutung gemessen.

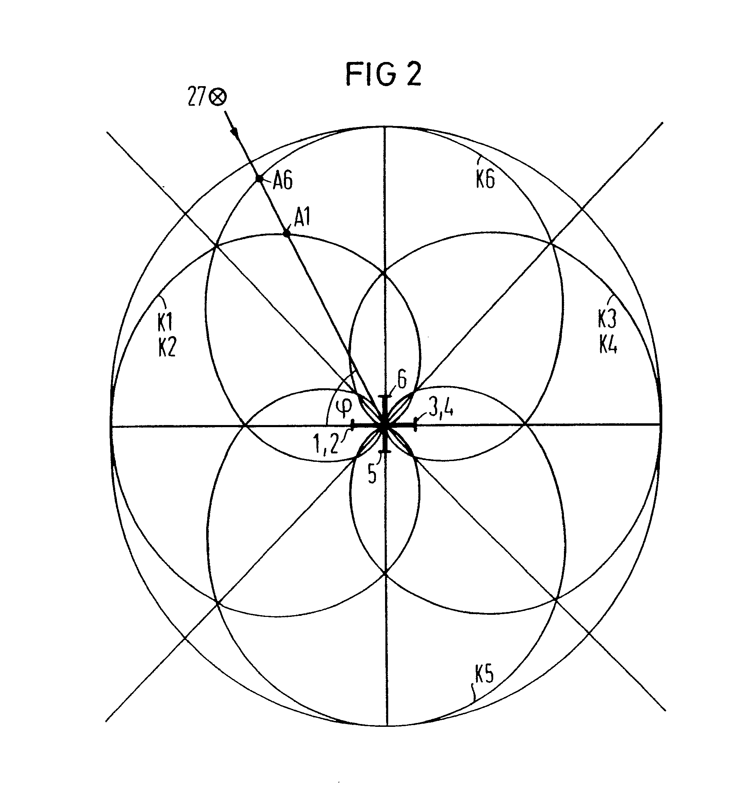

Fig. 2 zeigt darüber hinaus in einer Elevationsebene die Überlappung zweier weiterer Antennenkeulen K5 und K6, die von zwei Antennen 5 bzw. 6 ausgehen, deren Hauptstrahlungsrichtungen um 180° in der Elevationsebene versetzt sind. Die Antennen 5 und 6 sind hinsichtlich der vier Azimut-Erfassungs-Antennen 1-4 orthogonal montiert. Die beiden Antennen 5 und 6 ermöglichen somit zusätzlich zu den Antennen 1-4 die Messung des Elevationswinkels einer Mikrowellen-Strahlungsquelle. Somit ist eine sphärische Erfassung über die Vollkugel möglich. Das von der Signalquelle 27 in der Elevationsebene unter einem Winkel φ zur Horizontalebene einfallende Mikrowellensignal erzeugt in der Antenne 6 einen Pegelwert A6 und in der Antenne 1 einen Pegelwert A1. Über die übrigen Antennen 2-5 wird kein Pegelwert von Bedeutung erfaßt.

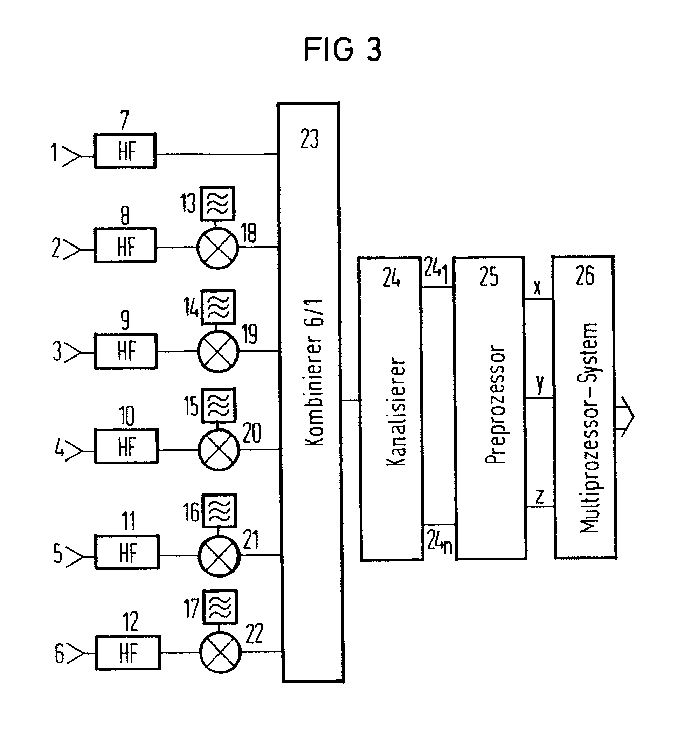

In dem in Fig. 3 dargestellten Blockschaltbild sind die wesentlichen Komponenten zur Realisierung des Peilverfahrens nach der Erfindung dargestellt. Dabei wird mit sechs Empfangsantennen 1-6 gearbeitet, deren Strahlungskeulen entsprechend den Figuren 1 und 2 ausgebildet sind. Die von den Antennen 1-6 empfangenen Hochfrequenzsignale gelangen in sechs diesen Antennen 1-6 zugeordnete Hochfrequenz-Eingangsstufen 7-12. In den Hochfrequenz-Eingangsstufen 7-12 wird zunächst die Gesamtbandbreite unterteilt und auf die Zwischenfrequenz-Bandbreite eines Kanalisierers 24 herabgemischt. Der Kanalisierer 24 besitzt entsprechend seiner Art eine hohe Augenblicksbandbreite bei großer Frequenzauflösung und kann sehr viele Signale gleichzeitig verarbeiten. Diese Fähigkeit wird verwendet, um auch eine Peilung und zwar entsprechend dem Verfahren nach der Erfindung durchzuführen.

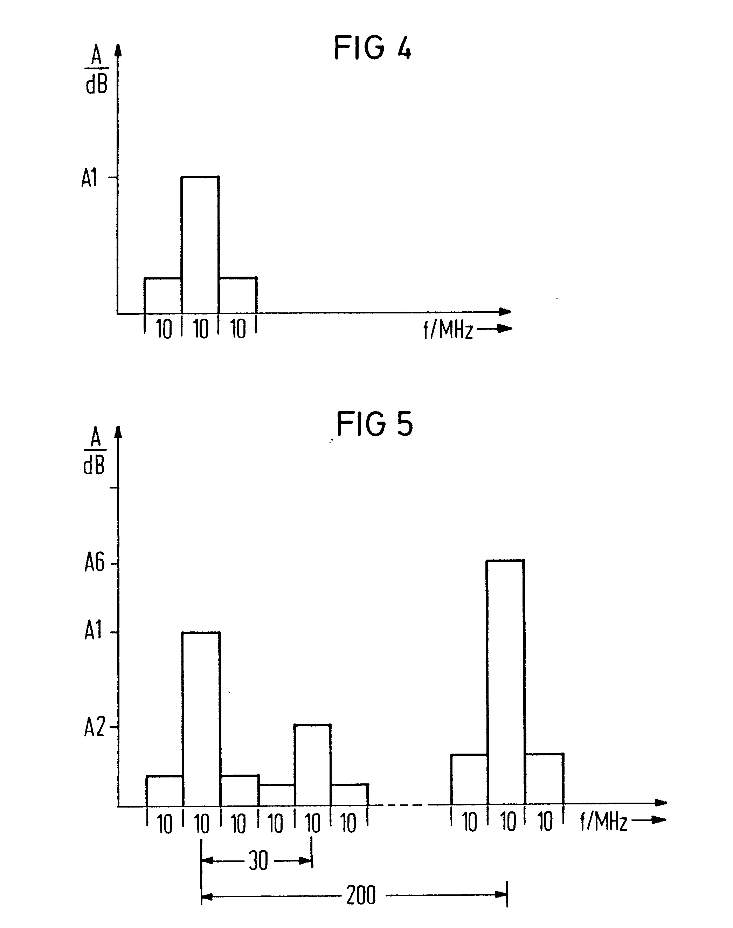

Puls- und CW-Signale, die über die Antenne 1 empfangen werden, gelangen direkt über einen Kombinierer 23, der sechs getrennt ankommende Signale zu einem Ausgangssignal zusammenfaßt, zum Kanalisierer 24 und erzeugen am Ausgang eine Signalform, wie sie in Fig. 4 dargestellt ist. Fig. 4 zeigt die Empfangspegel A in dB in drei benachbarten Frequenzbereichskanälen mit jeweils 10 MHz Bandbreite, wobei der Pegel A1 der maximale Empfangspegel ist und im mittleren der drei benachbarten Frequenzkanäle vorliegt. Die anderen, von den Antennen 2-6 kommenden Empfangswege enthalten zusätzlich nach der Hochfrequenz-Eingangsstufe 8-12 je einen Mischer 18-22 mit Lokaloszillator 13-17. Ein Impuls, der beispielsweise gleichzeitig über die Antennen 1 und 2 empfangen wird, wird im Mischer 18 des Empfangswegs für die Antenne 2 in einen höheren Frequenzbereich transferiert und entsprechend am Ausgang des Kanalisierers 24 dargestellt. Außerdem wird der Impuls z.B. noch über die Antenne 6 empfangen und dann im Mischer 22 des der Antenne 6 zugeordneten Empfangsweges in einen höheren Frequenzbereich transferiert und ebenso entsprechend am Ausgang des Kanalisierers 24 dargestellt. Fig. 5 zeigt das Spektrum dieses Einzelimpulses, der über die Antennen 1,2 und 6 empfangen wurde, als Funktion des Pegelwertes A in dB von der Frequenz f, wobei die Kanalbreite 10 MHz beträgt. Dabei ist A1 der maximale Pegel des über die Antenne 1 empfangenen Signals, A2 der maximale Pegel des über die Antenne 2 empfangenen Signals und A6 der maximale Pegel des über die Anntenne 6 aufgenommenen Signals. Nach Messung der Mittenfrequenzen und der zugehörenden Amplituden in einem den Kanälen $24_1$-$24_n$ nachgeschalteten Preprozessor 25 wird durch Berechnung des Amplitudenverhältnisses der Einfallswinkel, also $\alpha$ und $\phi$ nach den Figuren 1 und 2, bestimmt. Gute Peilergebnisse werden nur erzielt, wenn sich die Amplituden am Ausgang des Kanalisierers 24 möglichst nicht überlappen.

So sollte bei einer Kanalbreite von z.B. 10 MHz, wie dies im Ausführungsbeispiel angenommen wurde, der erste, zum zweiten Empfangsweg gehörende Lokaloszillator 13 das Signal um etwa 30 MHz in den oberen Frequenzbereich heraufmischen. Die einmalig zu wählende Frequenz hängt stark von der Filtersteilheit des Kanalisierers 24 ab. Wenn nun der nächste Lokaloszillator 14 das Signal um 60 MHz nach oben mischen würde, so ergäben sich Mehrdeutigkeiten in der Peilung, da nicht bekannt ist, über welche der Antennen 1-6 das Signal empfangen wurde. Aus diesem Grund sind die Frequenzen der Lokaloszillatoren 13-17 beispielsweise wie folgt zu staffeln: Lokaloszillator 13 30 MHz, Lokaloszillator 14 65 MHz, Lokaloszillator 15 105 MHz, Lokaloszillator 16 150 MHz und Lokaloszillator 17 200 MHz.

Da im Preprozessor 25 alle charakteristischen Daten eines jeweiligen Pulses, wie Frequenz, Amplitude, Ankunftszeit usw., gemessen werden, können aufgrund der vorgegebenen Differenzen der Frequenzen der Lokaloszillatoren 13-17 sehr leicht diejenigen der Antennen 1-6 bestimmt werden, die das jeweilige Signal empfangen haben. Somit ist eine eindeutige Berechnung des Raumwinkels möglich. Vom Preprozessor 25 werden die errechneten Daten eines Pulses über Datenwege x, y und z einem Multiprozessor-System 26 zur weiteren Auswertung und Darstellung zugeleitet.

Da die Hochfrequenz-Eingangsstufen 7-12 sowieso Mischer mit Lokaloszillatoren enthalten, kann die zusätzlich benötigte Mischfunktion, die gemäß Fig. 3 in den Mischern 18-22 erfolgt, direkt mit berücksichtigt werden, so daß - wenn überhaupt - nur ein minimaler Mehraufwand entsteht.

Wenn man ein normales Szenario, d.h. Strahlungsvorgänge ohne Reflexionen zugrunde legt, so werden die von einer Mikrowellen-Signalquelle ausgehenden Impulse lediglich von drei der Antennen 1-6 erfaßt. Somit erzeugt ein Impuls nur drei Spektren im Kanalisierer 24, d.h. keine sechs Spektren. Da die Richtung, aus der ein Signal kommt, ein äußerst wichtiger Sortierparameter ist, sollte diese möglichst früh bestimmt werden. Gegenüber einem kanalisierten Empfänger mit zugehöriger Datenverarbeitungskapazität ohne Peilmöglichkeit ist bei diesem Verfahren die Zahl der verarbeitbaren Impulse um den Faktor 3 geringer. Beschränkt man sich ausschließlich auf die Erfassung des Azimut-Winkelbereichs, so ist die Anzahl der verarbeitbaren Impulse nur um den Faktor 2 reduziert.

Bei den heute verfügbaren Systemen dürfte dieses jedoch keine Rolle spielen, da die rechtzeitige Bestimmung der Richtung, aus der das jeweilige Mikrowellensignal kommt, zumeist von vorrangiger Bedeutung ist. Im übrigen kann das System mit einem oder mehreren kanalisierten Empfängern erweitert werden, so daß das System jederzeit einem veränderten, dichteren Szenario angepaßt werden kann.

Die Leistungsfähigkeit des Peilverfahrens wird im wesentlichen durch die Peilgenauigkeit, die von der Pegelmeßgenauigkeit des Preprozessors 25 abhängt, vom Peilsektor, der von der Dynamik des Kanalisierers 24 bestimmt wird und von der Einzelkanalbreite des Kanalisierers 24 bzw. der Zeitauflösung des Empfangssystems, welche die minimale Impulsdauer für peilbare Einzelimpulse vorgeben, bestimmt.

**Patentansprüche**

1. Verfahren zur Peilung einer oder mehrerer Mikrowellensignale insbesondere in Pulsform abgebenden Signalquellen unter Verwendung von zwei oder mehr für gleiche Frequenz ausgelegten Antennen, deren Strahlungskeulen zueinander winkelmäßig versetzt sind, sich aber überlappen, so daß durch gleichzeitige Vermessung der Amplitudenpegel der mittels dieser Antennen empfangenen Signale und Pegelvergleich der Lagewinkel der Signalquelle durch Berechnung ermittelt wird,
**dadurch gekennzeichnet,**
daß die in den einzelnen Antennen (1-6) empfangenen Hochfrequenzsignale in antennenmäßig getrennten Hochfrequenzeingangsstufen (7-12) in eine Zwischenfrequenzlage umgesetzt und zusätzlich mittels frequenzmäßig voneinander abweichender Lokaloszillatoren (13-17) in Zwischenfrequenzsignale umgesetzt werden, die sich hinsichtlich ihrer Frequenzen entsprechend der unterschiedlichen, gestaffelten Lokaloszillatorfrequenzen unterscheiden, und daß nach einer Zusammenfassung aller Zwischenfrequenzsignale mittels eines Kombinierers (23) und nur einer sich daran anschließenden, mit gestaffelten Bandfiltern durchgeführten Kanalisierung (24) in parallele, jeweils einen sehr schmalen Zwischenfrequenz-Frequenzbereich überdeckende und insgesamt die gesamte Zwischenfrequenz-Bandbreite abdeckende Kanäle ($24_1$-$24_n$) in den Kanälen die Amplitudenpegel gemessen werden, wobei dann jeweils der Frequenzbereich der Kanäle der pegelmäßig vermessenen Signale eine eindeutige Zuordnung zu denjenigen Antennen und damit auch Strahlungskeulen herstellt, aus denen die empfangenen Signale stammen.

2. Verfahren nach Anspruch 1,
   **dadurch gekennzeichnet,**
   daß für eine 360°-Azimutwinkel-Erfassung die Mikrowellensignale mit vier Antennen (1-4) empfangen werden, deren Strahlungskeulen (K1-K4) in der Azimut-Ebene um 90° versetzt sind.

3. Verfahren nach den Ansprüchen 1 und 2,
   **dadurch gekennzeichnet,**
   daß zusätzlich für eine Elevationswinkelerfassung die Mikrowellensignale mit zwei hinsichtlich der vier Azimut-Erfassungs-Antennen (1-4) ortogonal montierten weiteren Antennen (5,6) empfangen werden, deren Strahlungskeulen (K5,K6) in der Elevationsebene um 180° versetzt sind.

4. Verfahren nach einem der vorhergehenden Ansprüche,
   **dadurch gekennzeichnet,**
   daß die Frequenzabstände zwischen den einzelnen Lokaloszillatoren (13-17) so gestaffelt sind, daß sich keine Mehrdeutigkeiten in einem Frequenzkanal ($24_1$-$24_n$) bezüglich der Antennenherkunft der Zwischenfrequenzsignale ergeben.

5. Verfahren nach einem der vorhergehenden Ansprüche,
   **dadurch gekennzeichnet,**
   daß in den Hochfrequenzeingangsstufen (7-12) die durch die frequenzmäßig gestaffelten Lokaloszillatoren (13-17) gebildete Zwischenfrequenz-Signalerzeugung bei der Umsetzung der Hochfrequenzsignale in die Zwischenfrequenzlage bereits mit berücksichtigt wird.

6. Verfahren nach einem der vorhergehenden Ansprüche,
   **gekennzeichnet durch**
   die Verwendung in einem elektronischen Aufklärungsempfänger, beispielsweise an Bord eines Luft- oder Bodenfahrzeugs.

# FIG 1

# FIG 2

EP 0 448 994 A1

# FIG 3

8

# FIG 4

# FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 195 492 (EMI)<br>* Figur 1; Zusammenfassung *<br>— — — | 1 | G 01 S 3/74 |
| Y | US-A-3 886 556 (R.V. LOWMAN)<br>* Figur 1; Anspruch 1 *<br>— — — | 1 | |
| A | DE-A-3 825 661 (LICENTIA PATENT-VERWALTUNG)<br>* Figur 1; Seite 2, Zeilen 3-19 *<br>— — — | 2 | |
| D,A | DE-C-2 702 114 (SIEMENS)<br>* Figur 9; Spalte 9, Zeilen 29-45 *<br>— — — | 1 | |
| P,A | EP-A-0 366 246 (MARCONI)<br>* Seite 2, Zeilen 5-26 *<br>— — — | 1 | |
| A | PATENT ABSTRACTS OF JAPAN Band 8, Nr. 208<br>(P-302)(1645), 21. September 1984;<br>& JP - A -59092369 (NIPPON DENKI) 28.05.1984<br>— — — — — | 1 | |

| | RECHERCHIERTE SACHGEBIETE (Int. Cl.5) |
|---|---|
| | G 01 S |

Der vorliegende Recherchenbericht wurde für alle Patentansprüche erstellt

| Recherchenort | Abschlußdatum der Recherche | Prüfer |
|---|---|---|
| Berlin | 12 Juni 91 | BREUSING J |